Europäisches Patentamt

European Patent Office

Office européen des brevets

(19)

(11) Publication number: 0 202 007
A2

# EUROPEAN PATENT APPLICATION

(12)

(21) Application number: 86302348.7

(51) Int. Cl.⁴: G06F 9/44

(22) Date of filing: 27.03.86

(30) Priority: 08.04.85 US 721187

(43) Date of publication of application:
20.11.86 Bulletin 86/47

(84) Designated Contracting States:
BE DE FR GB IT

(71) Applicant: AMERICAN TELEPHONE AND
TELEGRAPH COMPANY
550 Madison Avenue
New York, NY 10022(US)

(72) Inventor: Belanger, David Gerald
20 Royce Brook Road
Belle Mead New Jersey 08502(US)
Inventor: Kintala, Chandra Mohan Rao
253 Faragur Road
North Plainfield New Jersey 07062(US)

(74) Representative: Buckley, Christopher Simon
Thirsk et al
Western Electric Company Limited 5
Mornington Road
Woodford Green Essex IG8 OTU(GB)

(54) A generator of program generators.

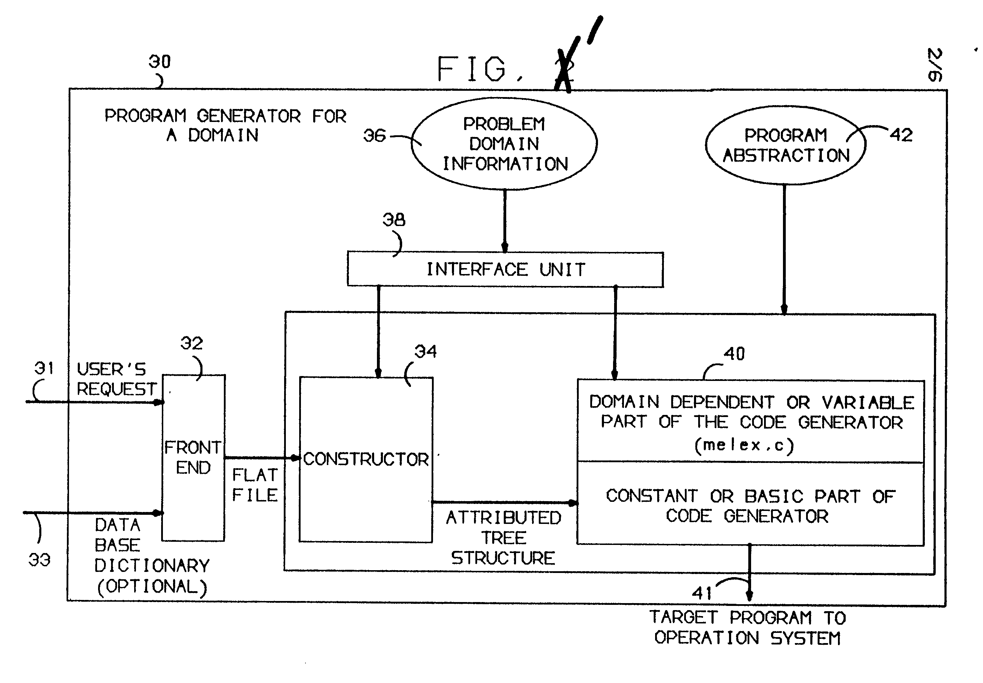

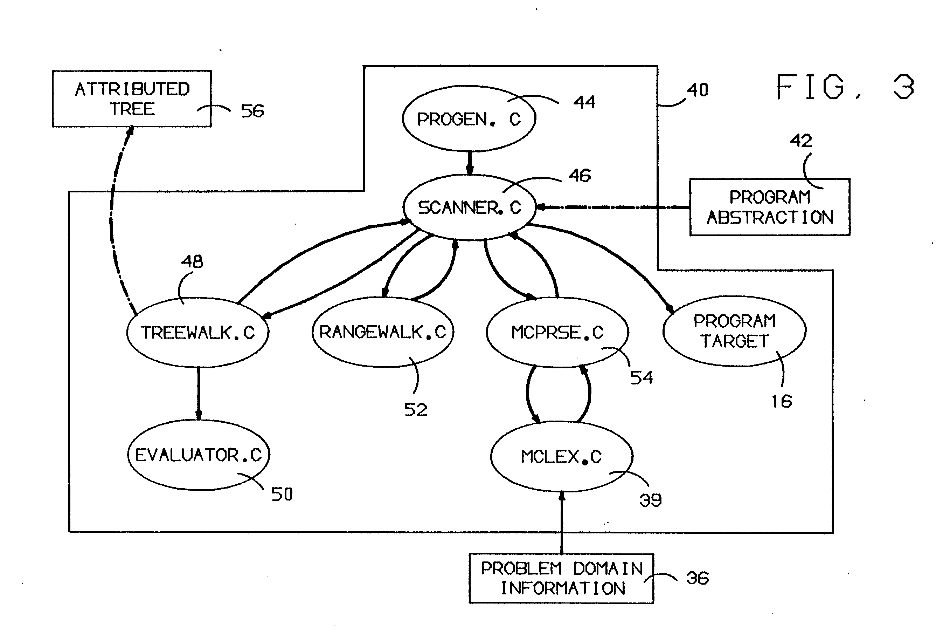

(57) Our innovative code generation technique interprets a program abstraction (42), derived after studying a class of programs, against an attributed tree - (from 34), representing a specification of problem instance, to generate a target program (16 FIG. 3) for solving the problem from the specification. The code generator (40) which has two parts is flexible in two aspects. First, a basic part allows flexibility within a domain by interpreting many abstractions of problems. A domain dependent part allows the technique to be applied to different problem domains. - (Fig. 1)

FIG. 2

PROGRAM GENERATOR FOR A DOMAIN — 30

36 — PROBLEM DOMAIN INFORMATION

PROGRAM ABSTRACTION — 42

38 — INTERFACE UNIT

31 — USER'S REQUEST

32 — FRONT END

33 — DATA BASE DICTIONARY (OPTIONAL)

FLAT FILE

34 — CONSTRUCTOR

ATTRIBUTED TREE STRUCTURE

40 — DOMAIN DEPENDENT OR VARIABLE PART OF THE CODE GENERATOR (melex.c)

CONSTANT OR BASIC PART OF CODE GENERATOR

41 — TARGET PROGRAM TO OPERATION SYSTEM

0 202 007

## A GENERATOR OF PROGRAM GENERATORS

Technical Field

This invention relates to the generation of programs and, in particular, to a method of building a generator of computer programs automatically. This method is referred to in the prior art as program generator generator or code generator generator.

Background of the Invention

A program is a sequence of statements in a particular computer language. Most computers support one of many high-level languages such as COBOL, PL/1, C, FORTRAN, and the like. Computers have, within their operating environment, systems known as compilers to translate the programs from high level language into a detailed sequence of machine operations. Given a computer and a computer language, say C, a programmer's task is to write a program to solve a certain problem; such a program is referred to as an application program or more often just application.

Suppose there exists a magnetic tape having the sales record of a company each sales record containing data about the region, salesman identification (salesman-id), product identification - (product-id), customer identification (customer-id), quantity and revenue. A problem might be stated as extracting and printing the records about sales negotiated by a particular salesman whose id is 9999. To solve this problem, the programmer has to write in C language, for example, the exact sequence of steps necessary to process and extract the required information from the tape. The C program would first set aside some temporary data areas in the memory for intermediate calculations, read a block of records from the tape one at a time, within each block read one record at a time, get the salesman-id of each record, compare it with 9999, print that record if there is a match and repeat this sequence of steps until the tape is fully read. A program in a pseudo C language for doing this task is given below:

```
#include <stdio.h>
main ( )
{
        char   region [2], salesman-id [4], product-id [4];
               customer-id [6], block_buffer [1024]
        int    quantity;
        float  revenue;
        open (tape);
        printf ("Sales records of salesman-id = 9999");
        while (scan_next_block ("%s", block_buffer) != EOF)
            while (get_next_record (block_buffer,
                    "%2.2s,%4.4s,%4.4s,%6.6s,%d,%f",
                    region, salesman-id, product-id,
                    customer-id, &quantity, &revenue)
                    != End_of_Block)
            {

                if (strcmp (salesman-id, "9999") == 0)
                {
                   printf ("%s:%s:%s:%d:%f",
                       region, product-id,
                       customer-id,
                       quantity, revenue);
                }
            }
}
```

Because experienced programmers are needed to write programs in high level languages, there have been many attempts to generate programs automatically from problem specifications. Writing these specifications is a much easier task than writing programs. For example, the specification of the previous problem might take the form "select sales records where salesman-id = 9999". If one has written a number of programs to solve problems of this nature, one notices a pattern in the structure of those programs for that class of problems. In the previous example, if the records did not have the region information and the selection criterion is "select product-id quantity where customer-id = 2345", then the corresponding pseudo C program might look like this:

```
#include <stdio.h>
main ()
{
    char    salesman-id [4], product-id [4],
            customer-id [6], block_buffer [1024],
            record_buffer [16];
    int     quantity;
    float   revenue;
    open (tape);
    printf ("product-id quantity of customer-id = 2345");
    while (scan_next_block ("%s, block_buffer)) != EOF)
            while (get_next_record (block_buffer),
                "%4.4s,%4.4s,%6.6s,%d,%f",
                region, salesman-id, product-id,
                customer-id, &quantity, &revenue)
                != End_of_Block)
        {
        if (strcmp (customer-id, "2435") == 0)
            {
                    printf ("%s:%d",
                        product-id, quantity);
            }
        }
}
```

The trick then to building a program generator is to encode the observed pattern into the generator, obtain the necessary information from the specification and produce the final program by plugging in the necessary variations to the pattern. Most of the program generators, currently known in the literature and market, operate on this principle. The difficulty with this approach is that these program generators are individually built. Because the program generator is itself another program, the builder, who is a person, of such a generator faces the common difficulties associated with programming. These include organizing the data structures, determining the exact sequence of steps for processing, organizing the different modules, and the like.

We observe that there is a 'pattern' to the process of building a program generator, in as much as there is a pattern to programs solving a certain class of problems. Moreover, program generation can be viewed as a translation from application-specific specification language to a high level programming language. This gives us a clue to the applicability of principles of compiling to program generation. In particular, it can be divided into three phases: syntax analysis, semantic analysis and code generation. Syntax analysis does the parsing of the input information to verify that the program is grammatically correct in terms of the language in which it is written, for example the C language. Semantic analysis analyzes the input specification for logical validity (that is, determines the meaning of the input program) and constructs the necessary data structures to be used by the next phase of compiling. The code generator then maps the given data structures into the target program.

We have observed that any class of programs solving tasks related to a particular problem domain can be abstracted and expressed in a suitable abstraction language. Problem domains having a hierarchical nature to their solutions tend to have a hierarchical structure in the corresponding programs. A hierarchical problem domain is a class of problems for which the specifications of the problems in the domain can be completely described and encoded by an attributed tree data structure in a computer.

An attributed tree is a collection of attributed nodes arranged in a hierarchical manner. A node usually corresponds to a data object in the real world, such as a record on a tape, position in a hierarchy. A node is said to be attributed, if it is a collection of related items, called attributes, of information about the object it represents. The root of the tree is the leading node in the hierarchy from which all the other nodes descend. Each node in the tree (except the root) has exactly one parent node from which it directly descends. The descendents, sometimes referred to as children in the prior art, of a node in a tree are all the nodes that descend from that node. Continuing the previous example, the problem instance can be encoded in the following structure:

```
Tape_information:
company name,
sales_records
        |
        |
        |
Record information:
record length = 20,
block_size = 1024,
record_condition =
    salesman_id = 9999
        |
        |
```

| field 1: | field 2: | field 3: | field 4: | field 5: | field 6: |
|----------|----------|----------|----------|----------|----------|
| region | salesman-id | product-id | quantity | revenue | customer-id |
| type C | type C | type C | type I | type F | type C |
| len 2 | len 4 | len 4 | len 2 | len 4 | len 6 |
| show y | show n | show y | show n | show y | show y |

All the specifications in the domain of data extraction problems from tapes with fixed record structures can be encoded in such an attributed tree. And, more interestingly, the corresponding programs to solve those problems have a similar pattern and that pattern can be expressed in the following way:

```
#include <stdio.h>
main ()
{
 FOR EACH CHARACTER TYPE FIELD IN THE RECORD HAVE:
 char FIELD_NAME [FIELD_LEN];
 FOR EACH INTEGER TYPE FIELD IN THE RECORD HAVE:
 int FIELD_NAME [FIELD_LEN];
 FOR EACH FLOAT TYPE FIELD IN THE RECORD HAVE:
 float FIELD_NAME [FIELD_LEN]

char block_buffer [BLOCK_LEN], record_buffer [RECORD_LEN];
open (tape);
printf ("FOR EACH REQUESTED FIELD HAVE:  FIELD_NAME,
         of RECORD_CONDITION");
while (scan_next_block ("%s",block_buffer) != EOF)
      while (get_next_record (block_buffer,"
          FOR EACH FIELD HAVE:
          IF TYPE = S %FIELD_LEN.FIELD_LENs,
          IF TYPE = I %d,
          IF TYPE = F %f,
          "
          FOR EACH FIELD HAVE:
          IF TYPE = S FIELD_NAME,
          IF TYPE = I &FIELD_NAME,
          IF TYPE = F &FIELD_NAME,
          ) != End_of_Block)
      {
      if (RECORD_CONDITION)
      {
          printf ("
                  FOR EACH REQUESTED FIELD HAVE:
                  %FIELD_TYPE:
                  "
                  FOR EACH REQUESTED FIELD HAVE:
                  FIELD_NAME);
      }
      }
}
```

It is therefore our objective to use this information from our observations to provide a system for a program builder to build his or her own program generator automatically which, when given the necessary information, will, in turn, generate a target program to solve an end user's problem.

Summary of the Invention

In response to information about a problem domain supplied by a program builder, an interface unit, which is a program, does two things: first it facilitates the tree constructor to convert a flat tree, which is received from a front end program, into an attributed tree and, second, it generates the domain dependent part of a code generator which together with the basic part, which is independent of the problem definition, forms the code generator (sometimes referred to as the program generator). The program generator uses an abstraction of the program, written after studying many programs common to a class, as a template and maps onto it information from the aforesaid attributed tree in generating a target program which is used to solve a user's problem.

More particularly, the interface unit provides the tree constructor the following information : the types of nodes in the tree, the valid hierarchical structures between the types and the valid set of attributes for each type.

The interface unit creates the domain dependent part of the program generator by collecting together all the builder supplied translation routines, if any, for each attribute type in the problem domain. This step of generating the domain dependent part can be bypassed by writing the part manually.

The target program is created by the program generator reading the program abstraction file one character at a time. Each character is transferred to the target program unless it is a meta character. The meta character along with the immediately following characters form meta strings which instruct the program generator on the next step, which may call for obtaining values from the attributed tree, to be sent on to the target program.

Brief Description of the Drawings

FIG. 1 is a block diagram showing the present invention;

FIG. 2 is a block diagram showing the prior art;

FIG. 3 shows the arrangement of the programs which are used in implementing the present invention;

FIG's. 4, 5 and 6 show flow charts which aid in understanding the flow of steps through the programs.

Detailed Description

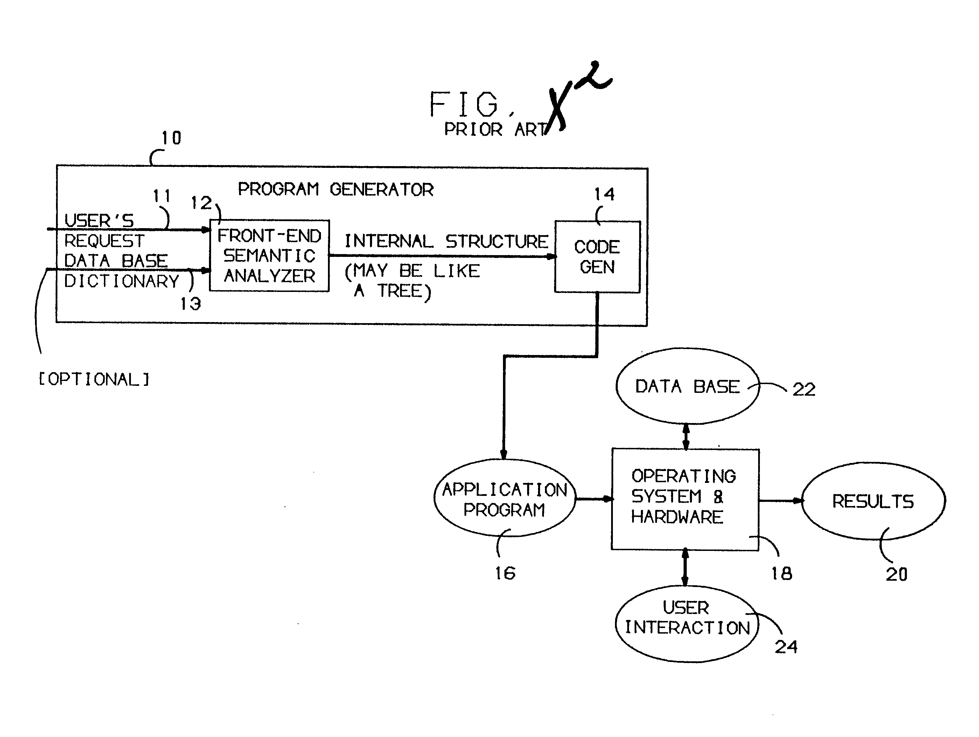

Referring to FIG. 2, there is shown a prior art circuit for generating programs. Program generator 10 generates an application program 16 which is entered in computer system 18 to generate the output 20. Computer system 18 comprises both hardware and an operating system. When the application program needs to interface with a data base, then date base 22 is accessed by computer system 18. User interaction with computer system 18 via terminal 24 is optional.

In response to a user's request, via lead 11, to front end 12, which is a computer program, an internal structure which may be a tree is made available to code generator 14. When the user's request requires the access of data base 22, an optional data base dictionary of data base 22, via lead 13, is supplied to front end 12 for generating the internal structure which is made available to code generator 14. A well known code generator is the compiler which takes a high level language and converts it to machine language. The problem with the prior art is the rigidity of the code generator, as disclosed more fully in the background section of this disclosure, in that a program generator must be written separately for each application.

The present invention is different from the prior art in three important ways. First, an innovative code generation technique is used which separates code generation modules into two parts, a constant or basic part and a variable or domain dependent part. The basic part has the major portion of the innovation and does the interpretation of the program abstractions and navigation of the attributed trees. The domain dependent part provides the supporting information about the problem domain. Second, a high level language which is called KS is used to write the abstraction programs. KS is an abbreviation for knowledge system -the abbreviation is used to avoid confusion with the use of the phrase knowledge system in other contexts. Third, information of the problem domain is used to create automatically the domain dependent part of the code generator. The code generator then interprets an incoming attributed tree against a program abstraction which is a generic description of the solution, to generate the target program.

A program abstraction in KS language is a sequence of ordinary and special characters. Ordinary characters have no special meaning and are simply echoed by the program generation process. Special characters are distinguished from the ordinary characters by their context in the program abstraction. All special characters are preceded by the tilde character, ~. A list of these characters along with their meanings follows:

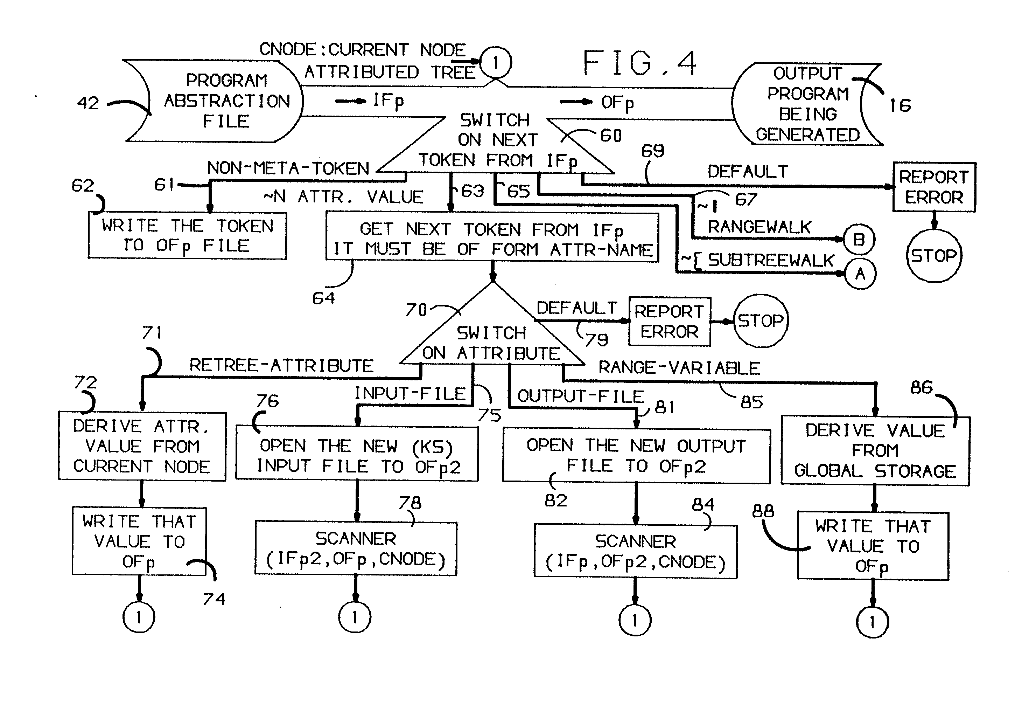

~" means substitute next argument with a value from the attribute tree; this will be explained more fully with reference to the flow chart of FIG. 4 hereinbelow;

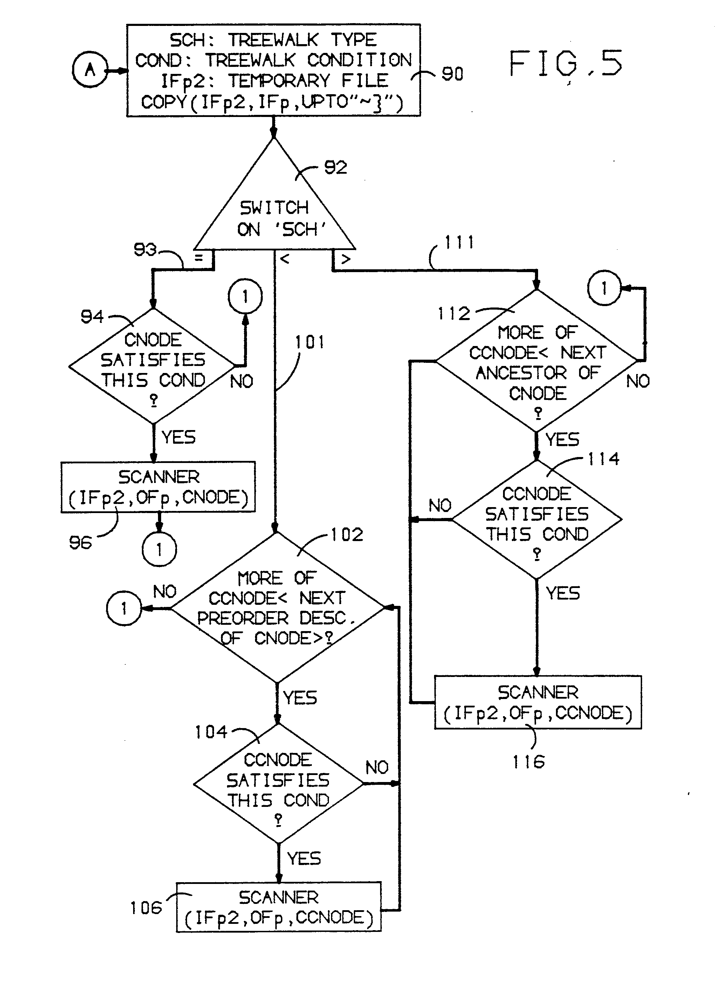

~{ means conditional interpretation and depends on whether the next symbol is a =, < or >; this is called a tree walk and is explained with reference to the flow chart of FIG. 5 hereinbelow; this treewalk ends with a ~}

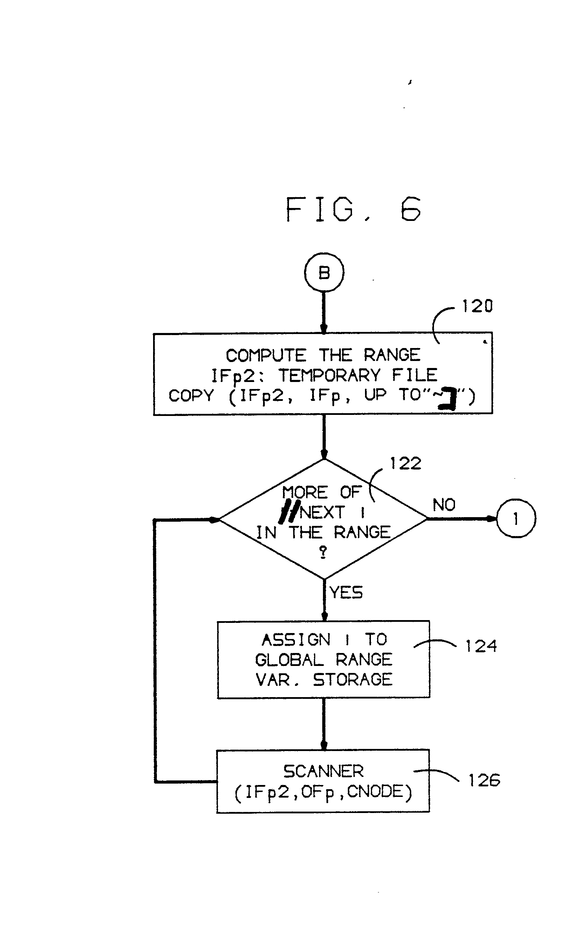

~[ means repeated and recursive expansion, is referred to as a range walk and is described with reference to flow chart of FIG. 6 hereinbelow; this range walk ends with a ~].

The following pseudo code is included here, however, to aid in understanding the description of the invention. The input to the code generator comprises three components: 1) KS_file which is a program abstraction describing the structure of the program to be generated; 2) Retree which is an attributed tree, the semantic tree, describing the user query against the source database; and 3) outfname which is the output file name.

```
progen(ks_file,retree,outfname)        /*main program*/
{
    ifp = fopen(ks_file,"r")';         /*input file pointer*/
    ofp = fopen(outfname,"w");         /*output file pointer*/
    cnode = root(retree);              /*current node*/
    scanner(ifp,ofp,cnode);            /initiate the process*/
    fclose(ifp);
    fclose(ofp);
    fclose(ofp);
}
scanner(ifp, ofp, cnode) /* recursive scanner and code
       generator */
{
    while((token = next_token(ifp)) != EOF)  {
      switch(token)  {
        case '~':  /* attribute value substitution */
          aname = get_attr_name(ifp);
          switch(aname) {
             case 'simple attr':
               temp_str = get_attr_value(cnode,aname);
               fprintf(ofp, "%s", temp_str);
               break;
             case 'inp file name':
               ifp2 = fopen(aname, "r");
               scanner(ifp2, ofp, cnode);
               fclose(ifp2);
               break;
             case 'out_file_name';
               ofp2 = fopen(aname, "w");
               scanner(ifp, ofp2, cnode);
               fclose(ofp2);
               break;
```

55

9

```
      case 'range_var": /* a global variable */
        temp_i = get_current_val(range_var);
        fprint(ofp, "%d", temp i);
        break;
      default;
        report(error);
    }  /* end of the switch on attribute types */
    break;
case '~{':  /* subtree walk */
    sch = get_treewalk_type(ifp);
    cond = get_treewalk_cond(ifp);
    temp_file_name = next_file_name();
    ifp2 = fopen(temp_file_anem, "w");
    copy(ifp2, ifp, upto('~}'));
    fclose(ifp2);
    switch(sch)  {
     case '=': /* visit this cnode only */
       if(not satisfy(cnode, cond)) break;
       ifp2 = fopen(temp_file_name, "r");
       scanner(ifp2, ofp, cnode);
       fclose(ifp2);
       break;
     case '<':  /* visit all the descendants of
            cnode */
       for each(ccnode = next_preorder_descen
            (cnode) {
          if(not_satisfy(ccnode, cond)) break;
            ifp2 = fopen(temp_file_name, "r");
          scanner(ifp2,ofp,cnode);
          fclose(ifp2);
       }
         break;
     case '>':  /* visit all the ancestors of cnodes */
       for each(ccnode = next_ancestor(cnode)    {
         if(not_satisfy(ccnode, cond)) break;
          ifp2 = fopen(temp_file_name, "r");
         scanner(ifp2, ofp, ccnode);
```

```
          fclose(ifp2);
        }
        break;
      case '>=': /*visit cnode all the ancestors off
        cnode */
        ...
        ...
        break;
      case '<=': /*vist cnode all the descendants of
        cnode */
        ...
        ...
        break;
      default:
        report(error);
        }  /* end of the switch on traversal types */
        break;
      case '~[':  /*iterate over a range */
        range_seq = get_range(ifp);
        temp_file_name = next_file_name();
        ifp2 = fopen(temp_file_name, "w");
        copy(ifp2, ifp, upto('~]'));
        fclose(ifp2);
        for each(i in the range_seq)  {
          range_var_value = i;
          ifp2 = fopen(temp_file_name, "r");
          scanner(ifp2, ofp, cnode);
          fclose(ifp2);
            }
          break;
        case 'simple_char':  /* non-meta character */
          fprintf(ofp, token);
          break;
        default;
          report(error);
  } /* end of the switch on token types */
  }    /* end of the while loop on input tokens */

}
```

Referring to FIG. 1, there is shown in block diagram a generator 30 of a program generator 40. Information about a specific problem domain, problem domain information 36, is prepared by the program builder who is a person and sent as a file to interface circuit 38 (interface unit) which does two things. First, the necessary information about the particular problem domain is given to produce a tree constructor 34 for preparing an attributed tree from a flat tree input. Second, the information about the particular problem domain is used for preparing the domain dependent part of the code generator. The domain dependent part is merged with the basic part of the code generator which is independent of a particular problem domain to obtain code generator 40. Program abstraction 42, which is a file prepared by analyzing a plurality of programs for solving problems within a class, is made available to code generator 40.

As in the prior art, a user's request via lead 31 and an optional data base dictionary via lead 33 are fed to a front end 32 which generates a flat tree for delivery to tree constructor 34. Code generator 40 thereafter maps the attributed tree onto the program abstraction to obtain the desired output, via lead 41, the target program, such as element 16 of FIG. 1. The target program is then used in the manner described with reference to FIG. 1 hereinabove. The operation of code generator 40 is explained hereinbelow.

Referring to FIG. 3, the process is initiated at progen.c 44 which sets up the following arguments, files, pointers shown in pseudo code:

```
progen( ks_file, retree, outfname) /* main program in the
    process */
{
        ifp = fopen(ks_file, "r");   /* input file pointer */
        ofp = fopen(outfname, "w");  /* output file pointer */
        cnode = root( retree);       /* current node */
        scanner (ifp, ofp, cnode);   /* initiate the process */
        fclose(ifp);
        fclose(ofp);
}
```

The process begins at the root node of the attributed tree and the first character in the ks_file. The program scanner.c 46 then reads a token from program abstraction 42. If this token is not a meta character it is written to the target 16 via path 61. This is shown in the flow chart of FIG. 4 as event 62. The pseudo code follows:

```
scanner(ifp, ofp, cnode) /* recursive scanner and code
    generator */
{
    while((token = next_token(ifp)) != EOF {
        switch(token) {
        case 'simple_char': /* non-meta character */
            fprintf(ofp, token);
            break;
        ....
```

The program flow then returns to scanner.c 46.

If the next token from program abstraction file 42 is ~ " followed by an attribute name, the next token is obtained from the program abstraction file as shown by state 64 of FIG. 4. The token must be of the form ATTR_NAME. A decision is then made to switch on the attribute. As shown by event 70, any one of five paths may be followed depending on the value of the attribute. If the attribute calls for a retree, then path 71 is selected and the attribute value is derived from the attributed tree. This is shown as event 72. The pseudo code for this follows:

```
case '~"': /* attribute value substitution */
aname = get_attr_name(ifp);
switch(aname) {
    case 'simple_attr':
        temp_str = get_attr_value(cnode, aname);
        fprintf(ofp, "%s", temp_str);
        break;
    ...
}
```

The output is written to target program 16 as shown by event 74 of FIG. 4. The call to "get_attr_value" calls the function mcprse 54 which determines whether the attribute is domain dependent. If not, mcprse evaluates the attribute and returns a value. If the attribute is domain dependent, mcprse calls mclex 39 which evaluates the attribute and returns the value. The function mcprse, in turn, returns this value as event 72. The output is then written to target program 16 and control returns to scanner.c 46, state 60 of FIG. 4.

The function mclexgen is actually a convenience which is provided to the builder of a program generation system using the invention. It provides a simple language so that a user can create the domain dependent part of a program generator without knowledge of the internal structure of the program generation system. In practice, a builder of a program generator may bypass mclexgen and write the domain dependent code. In such a case, the function of tree constructor 34 will be performed by the domain dependent part 39.

The function mclexgen uses lex and yacc, which are standard UNIX system commands, and a language with the following structure:

```
decl
{
/*here, declarations for domain dependent code are entered*/
}


function NAME
{
/*here, user supplied functions are entered */
}


TYPE NAME and optional VALUE
{
/*here, actions based on NAME are entered */
}
```

This compiler produces a C function (mclex.c 39) which tests each expander passed by mcprse.c 54 and determines its "value" and returns that value.

For example, in TTU the expander sc stands for replacement by the field length of the current node in the retrieval tree. Within mxlex.c the code corresponding to this is:

```
if ( strcmp (mcl_token, "sc" ) == 0 ) {
    sprintf(s, "%d", retree[mcl_i]. fldlen);
    break;
}
```

This immediately preceding code was written manually. The only difference between this code and the code generated by mclexgen is that the "if" test is a case statement based on a value derived from sc. This will provide the same function with more efficiency. The corresponding mclexgen statement for sc is:

```
int sc;
{
install (use_i (sc) );
}
```

If path 75 is selected by state 70, then events 76 and 78 are cycled through. The pseudo code for this follows:

14

```
case 'inp_file_name':
    ifp2 = fopen(aname, "r");
    scanner(ifp2, ofp, cnode);
    fclose(ifp2);
    break;
    ....
```

The control is then returned to state 60.

If path 81 is selected, events 82 and 84 are cycled through. The pseudo code for this follows:

```
case 'out_file_name':
    ofp2 = fopen(aname, "w");
    scanner(ifp, ofp2, cnode);
    fclose(ofp2);
    break;
    ....
```

If path 85 is selected, events 86 and 88 are cycled through. The pseudo code for this follows:

```
case 'range_var':    /* a global variable */
    temp_i = get_current_val(range_var);
    fprint(ofp, "%d", temp_i);
    break;
    ....
```

Control is then returned to state 60 in FIG. 4.

In default, an error is reported as shown by path 79 and the program is stopped. The pseudo code for this follows:

```
default:
    report(error);
    ....
```

If there is no default, when control is returned to event 60 the next token is read from program abstraction file 42. If the token has the characters ~{ a subtree walk is indicated. The program flow is shown by FIG's. 3 and 5. The characters ~{ will be followed by one of the navigational symbols =, <, or >. The navigational symbol tells the system the node on the attributed tree from which a search should begin. The navigational symbol = means apply this block only to the current node in the attributed tree. The navigational symbol < means a block is to be applied to each first level descendent of the current node. The navigational symbol > means that the block is to be applied to each of the nodes in the ancestor chain of the current node in ascending order, that is, up the chain.

The navigational symbol is followed by a conditional string. The conditional string determines for a node whether the block will be applied in the program generation. An upper case letter implies the logical true, and a lower case letter implies the logical false.

As shown by state 92 of FIG. 5, if the navigational symbol is =, path 93 is selected. The pseudo code for this section follows:

```
case '~[':   /* subtree walk */
 sch = get_treewalk_type(ifp);
 cond = get_treewalk_cond(ifp);
 temp_file_name = next_file_name( );
 ifp2 = fopen(temp_file_name, "w");
 copy(ifp2, ifp, upto('~}'));
 fclose(ifp2);
 switch(sch) {

case '=': /* visit this cnode only */
   if(not_satisfy(cnode, cond)) break;
   ifp2 = fopen(temp_file_name, "c");
   scanner(ifp2, ofp, cnode);
   fclose(ifp2);
   break;

   . . . .
```

The pseudo code, if the path 101 is selected, when the navigational symbol is < follows:

```
case '<':   /* vist all the descendents of cnode */
  for each(ccnode = next_preorder_descen(cnode) {
      if(not_satisfy(ccnode, cond)) break;
      ifp2 = fopen(temp_file_name, "r");
      scanner(ifp2, ofp, ccnode);
      fclose(ifp2);
  }
  break;
```

The pseudo code for the navigational symbol >
when path 111 is selected follows:

```
case '>': /* visit all the ancestors of cnode */
for each(ccnode = next ancestor(cnode) {
    if(not_satisfy(ccnode, cond)) break;
    ifp2 = fopen(temp_file_name, "r");
    scanner(ifp2, ofp, ccnode);
    close(ifp2);
    }
break;
....
```

In each case control is returned to state 60 of FIG. 4. Two additional symbols are derived from the aforesaid navigational symbols: <= and >=. The first combination <= is used for applying the block to current node and each of the descendents of the current node. The second combination >= is used for applying the block to the current node and each of the nodes in the ancestor chain of the current node. The pseudo code for these follows:

```
case '>=': /* visit cnode and all the ancestors of
    cnode */
for each ((ccnode = cnode) | (ccnode=next_ancestor
    (cnode))){
        if(not_satisfy(ccnode,cnode)) break;
        ifp2 = fopen(temp_file_name,"r");
        scanner(ifp2, ofp, ccnode);
        fclose(ifp2);
}
break;
case '<=': /* visit cnode and all the descendants of cnode*/
        for each((ccnode=cnode) | (ccnode=next_preorder
        _descendent (cnode))){
            if (not_satisfy(ccnode, cond)) break;
            ifp2 = fopen (temp_file_none, "r");
            scanner (ifp2, ofp, ccnode);
            fclose(ifp2);
}
break;
    . . . .
```

The end of the subtree walk is indicated by the characters ~].

If the token read from program abstraction file 42 has the characters ~[ a rangewalk is indicated. The program flow for this is shown by FIG's. 6 and 3. The block of code to be repeated end at the character set ~], as stated by event 120. The range is cycled through by state 122 and events 124 and 126. The pseudo code for this follows:

```
case '~[':   /* iterate over a range */
    range_seq = get_range(ifp);
    temp_file_name = next_file_name( );
    ifp2 = fopen(temp_file_name, "w");
    copy(ifp2, ifp, upto('~]'));
    fclose(ifp2);
    for each(i in the range_seq) {
            range_var_value = i;
            ifp2 = fopen(temp_file_name, "r");
            scanner(ifp2, ofp, cnode);
            fclose(ifp2);
    }
    break
    . . . .
```

If the token from the abstraction tile does not lead to path 61, 63, 65, or 67, path 69 is followed and a default is declared. Th pseudo code follows:

```
        default:
            report(error);
    }                /* end of switch on token types */
}                    /* end of the while loop on input tokens */
}
```

An example of the use of the present invention, namely the method of generating a code generator, is the generation of a target program which is used for extracting data from a tape using the UNIX, a trademark of Bell Telephone Laboratories, Inc., operationg system (TTU). TTU is a program generator which accepts a very high level description - (the dictionary) of a magnetic tape file and a user's request for data from that file and translates them into a very efficient program to retrieve and translate the data on the tape providing a file of data satisfying the user's requests.

As stated hereinabove with reference to FIG. 2, in order to use this invention a front end program is necessary. Such programs are known and will not be described herein. The front end for TTU requires two input data: a user's request, and a tape dictionary. The output form the front end program is a flat tree.

The following is an example of a short portion of a dictionary for TTU.

```
SALES-BY-REGION 9408 n

SALESREC dummy n 1

(

        REGION s n 10

        SALESMAN-ID n n 4

        PRODID n n 4

        QUANTITY p n 4

        REVENUE p n 4

        CUST-ID n n 4

}
```

Example 1

Example 1 shows a tape whose name is SALES-BY-REGION with a single type of record, SALESREC, which has the fields: REGION, SALESMAN-ID, PROD-ID, CUST-ID, QUANTITY, and REVENUE. Each of these lines has information about the entity it describes. For example, the line SALES-BY-REGION, which is the tape name, has the block length 9408 of the tape and an n which indicates that the tape does not have variable length records; if it did, the entry would have been a v. The next line is the record definition line, in this case SALESREC, and has three entries. The first entry, dummy, is entered for indicating the unique identification for this record which tells which type of record has been retrieved in the event there are two or more types. The next entry n indicates that there are no key fields on this record. The last entry 1 is a level indicator for the case where the records on the tape form a hierarchy like a tree structure.

The remaining lines describe data fields on the SALESREC record. Each must have a field type (p is packed, s is string, n is numeric, ...), a field length and a "y" or "n", to indicate whether the field is a key field.

As one skilled in the art would readily observe, this dictionary has described a collection of data which logically looks like a table whose rows are instances of the data record SALESREC and whose columns are lists of the respective fields. That is, the first column is a list of values for REGION, the second for SALESMAN-ID, and the like. The user's problem then is to get, as efficiently as possible, those values of interest off this tape.

For example, a user might want a list of customers in the southwest region. A request to extract this information from the tape is shown in Example 2 hereinbelow.

```
condition:  REGION = "SOUTHWEST"
   select:  CUST-ID
```

Example 2

For TTU, the dictionary represents static information about a particular magnetic tape file. Once created, the dictionary can be reused for all tape files with the same structure. In addition, because the dictionary is to be created by a user, it must have the minimum amount of information needed to generate the requested programs.

The attributed tree structure may look like Example 4 hereinbelow.

```
Name:  SALES_BY_REGION
Length:  9408
True states:  R, S


Name:  SALESREC
Length:  30
Writestat:  1
Condition =
   salesman_id = 9999
True states:  C, F, I, S, W
```

| Name: | | | | | |
|-------|------------|------------|----------|---------|-----------|
| Region | Salesman-id | Product-id | Quantity | Revenue | Customer -id |
| Length: | | | | | |
| 10 | 4 | 4 | 4 | 4 | 4 |
| Writestat: | | | | | |
| 3 | 0 | 0 | 0 | 0 | 1 |
| True states: | | | | | |
| CILSW | LN | LN | LP | LP | FLNW |

Example 4

Each member of the tree has a name, length, and a state vector which describes to the program generator the conditions under which it should be used in generating the code. In addition, some members have unique items such as "condition" in the SALESREC node which carries a string representing the user's condition in a form usable by the program generator.

Another input to the code generator is a program abstraction or knowledge system (KS) file. In every program generation system using our invention, one or more program abstraction or KS files must be provided by the builder. Each KS file represents a different type of program to be generated. The KS file for TTU generates programs which read and translate data from tapes (or disk) using EBCDIC character codes into disk files (or tapes) using ASCII character codes. In addition, the program does tests to satisfy users requirements on te types of records to be transmitted and the data fields to be returned. Field delimiters, as used on UNIX Systems, are generally embedded in the output files. The generated program is in the C programming language.

The language which is used to create the KS files is independent of the computer language which is to be used in the generated programs. In the case of TTU, the generated programs are in the C programming language. Other programming languages may be used.

The purpose of the KS file is to describe to the program generator the type of program that is to be generated and how it is to interpret input information, which is passed to it in the attributed tree, in building the target program. The KS file is structured as a set of nested blocks, each of which has a set of rules associated with it use. Example 5 is a small section of the KS file which was created for TTU.

```
~{(LE)
int iv_~"a";
FILE *i_"a";
~{(F|N|A|S)
int t_~"a";
~}
~{(S)
char t ~"a~[~"sc" + 1];
~}
~}
```

Example 5

In the KS language, blocks are contained within matching sets of ~{ and ~}. The first line of Example 5 begins with the characters ~{ indicating the beginning of a block. The fourth line also begins with an opener ~{ indicating the beginning of another block which is nested within the first block because the first block has not been closed. Line 6 has the terminator characters ~} indicating that the innermost block is terminated. The rule is that a terminator closes the innermost open block. On line 7, another block is opened, the outermost block which was opened at line 1 remains open. The terminator at line 9 closes the nested block which was opened at line 7. Likewise, the terminator at line 10 closes the block which was opened at line 1.

There are certain rules for the program generator to follow in determining when a block is to be used. After the block opener ~{, the KS file may have , within parentheses, rules for the use of that block. In the present TTU example, the following rules are used:

1) Characters indicate the elements of the attributed tree to which this block applies. In example 5, the current element, by default, indicates that if the program generator is currently placed on a node named X, this block refers to values found in the node X. The other possibilities are: <, >, =, <=, >=.

2) Strings of alphabetic characters: upper case indicates TRUE and lower case indicates FALSE. In example 5, the first block has the rule "LE" which indicates that both "L" and "E" must be TRUE for this block to be used in the program generator. In TTU, "L" indicates that the current node in the attributed tree is a field, as contrasted to a file or a record; "E" indicates that the field has been selected for use in the TTU "SORTED" option which allows the selection of records on the target type by matching the value of a chosen field with the values on a file provided by the tape user. Logically, this is simply a long string of "OR" conditions but because their number may run in the thousands this option is very convenient and efficient.

Logical operations such as "AND" and "OR" are represented by "&" and "|". The rule on

the first inner block in example 5 containing many "|" operations. This indicates that if any of the propositions in this rule is TRUE then the entire rule is TRUE. For example, "P" indicates that the field is in packed decimal format while "N" indicates that it is in numeric format. The connector "AND" is implied so that "LE" in the first block's rule is equivalent to "L" and "E". In this case, both conditions must be TRUE to satisfy the rule. For TTU, the rules are written in disjunctive normal form which means that all rules are conjunctions, values connected by "AND", separated by "OR's". That is, "AND" has higher precedence than "OR".

The interior of each block in the KS file for the TTU is made up of statements in C language. In example 5, one such statement is

```
FILE *i_"~a";
```

These statements may have embedded in them items which are not in the C language but are directives to the program generator to place appropriate new strings of characters in their place. In this case, the ~"a" is an instruction to place the name of the current node of the attributed tree structure in this place. The actual C statement generated for an attributed node with the name "node1" woud be:

```
FILE *i_node1;
```

These replacement instructions are meta characters and are recursive in the sense that they may themselves have other meta characters. Each program generator built using this invention requires a set of such meta characters and instructions on their meaning. These must be provided by the program generator builder and are incorporated into the program generation system. In the case of TTU they include instructions for replacement of values as above, instructions to change input or output files and arithmetic instructions.

In the following example we show how the program generator produces a target program by using the KS file as a template and mappig values from the attributed tree. The target program is for reading data from a computer file and for writing some of that data on a standard output, such as a CRT. A sample input for the KS file is shown in Example 6 and a sample input for the attributed tree is shown in Example 7.

```
~{ (=R)
#include <stdio.h>
main()
{
struct instruct {
~{ (<L)
~{ (=S)
char ~"name"[~"lengtn" + 1];
~}
~{ (=I)
int ~"name";
~}
~} indata;
FILE *ip;
ip = fopen("~"name"","r");
while(fscanf(ip, "
~{ (<L)
~{ (=S)
%s,
~}
```

```
022    ~{(=I)
023    %d,
024    ~}
025    ~{(SF|IF)
026    ~"delim",
027    ~}
028    ~}
029    ",
030    ~{(<L)
031    ~{(=S)
032    ~}
033    ~{(=I)
034    &~"name",
035    ~}
036    ~{(=Sf|If)
037    ,
038    ~}
039    ~{{(=SF|IF)
040    ) != EOF}  {
041    ~}
042    ~}
043    if (~"cond" {
044    printf("
045    ~{(<L)
046    ~{(=S)
047    %s,
048    ~}
049    ~{(=I)
050    %d,
051    ~}
052    ~{(Sf|If)
053    ~"delim",
054    ~}
055    ~{(=SF|IF)
056    ",
057    ~}
058    ~}
```

```
059      ~{ ( <L)
060      ~{ (=S | I)
061      ~ "name"
062      ~}
063      ~{ (=f)
064      ,
065      ~}
066      ~}
067      );
068      }
069      }
070      fclose(ip);
071      }
072      ~}
```

Example 6

In example 7 and in the discussion hereinbelow, the inputs to the program generator which are in the upper case are specific to the problem.

```
true states = R
name = INFILE
cond = "FLD1 <= 700"
delim = :
```

true states=L, I, W     true states=L, I     true states = L, S, W, F

name = FLD1           name = FLD2         name = FLD3

length = 10

Example 7

The program generation process scans the KS file and responds to the instructions therein. In some cases, the instructions will require the reading of the attributed tree, in particular, those cases in which a token (t) is of the form ~"T". The reading of the KS file is controlled by the navigation blocks ~{(...) and is otherwise sequential.

On entering the program generator the currency indicator for the attributed tree file (ATF) is set at the root, in this case the node named INFILE. The system proceeds to scan the KS file from the top. The first line creates a block with the block opening characters ~{. This block opener must have a corresponding block terminator ~} which appears in the last line of example 6. The opener also describes the condition under which the block is to be used, navigational and conditional, as stated herinabove. In line 001 of example 6, the condition reads =R. The character = means the block is to be applied only to the current node in the ATF. The character R means the block is to be applied only if the current node has R as a true state. From Example 7, it is seen that R is true for the current node: INFILE. Intuitively, this is passing to the KS file the information that the current node is the root node. In other uses of the program generator, the state R may have other meanings as defined by the attributed tree from the problem domain information supplied by the builder.

Because the condition is ture, the program generator starts to scan the block. In this case there is only one outer block, so this block is the whole file. Lines 002 through 005 have no meta characters and therefore are printed to the output program exactly as they appear. These are standard beginning lines for a program in C language. Line 006 is another block definition statement. In this case, the block is nested inside the earlier block. The navigational symbol < indicates that this block is to be applied to each first level descendent of the current node. In addition, it is to be applied only if the state L is true. As shown in the ATF of example 7, the first node under the root for which the state L is true is the node named FLD1. Therefore, processing of the block continues.

The next line 007, initiates a block to be used on the current node if the state S is true. In this case it is not, so processing skips to the end of the block which is line 009.

Line 10 starts another block, in this case to be used if the current block has the state I true. Because I is true in the FLD1 block, scanning continues with this block. Line 011 is scanned and the characters int are sent directly to the target program. The token ~"name" indicates that the program generator should retrieve the value associated with the symbol 'name' in the ATF. Referring to example 7, this value is FLD1 and that string is output followed by character, ;. The result of this activity thus far is a target program which is shown in example 8.

```
#include <stdio.h>
main ()
{
struct INSTRUCT {
int FLD1;
```

Example 8

Continuing this scanning process, the block which began at line 010 is ended at line 012 and the block which began at line 006 is ended at line 013. The block which began at line 006 is repeated with the next descendent of block 1's current node, that is, with the node named FLD2. The scanning process continues with the block which began at line 006 for node FLD2. This step is repeated for the next node FLD3. Because there are no more descendents in the ATF as is shown in example 7, processing returns the program generator to block 1 at line 014 and with the current node still in INFILE. Lines 014 and 015 are scanned and have no meta characters. This completes the data definition part of the target program which is shown in example 9.

```
# include <stdio.h>
main ()
{
struct instruct {
int FLD1;
int FLD2;
char FLD3[10 + 1];
} indata
FILE *ip;
```

Example 9

The remainder of the program generation process proceeds in exactly the same manner as above. The completed output for this problem is shown in example 10.

```
#include <stdio.h>
main ()
{
struct instruct {
int FLD1;
int FLD2;
char FLD3[10 + 1];
} indata
FILE *ip;
ip = fopen(INFILE", "r");
while(fscanf(ip, "%d,%d,%s",
&FLD1,
&FLD2,
FLD3
  ) != EOF) {
if(FLD2 <= 700) {
printf("%d,%s",
    FLD1,
    FLD3
        );
}
```

```
}
fclose(ip);
}
```

Example 10

29

## Claims

1. A method of building a code generator which has a large constant part and a smaller variable part said method

CHARACTERIZED BY

interpreting program abstractions in terms of a problem specification described by an attributed tree, and generating an output program for solving said problem from said specification.

2. The method of claim 1

CHARACTERIZED IN THAT

said variable part is generated after receiving information from a program generator builder.

3. The method of claim 1 further

CHARACTERIZED BY

receiving information from a program generator builder to generate said attributed tree using said problem specification.

4. The method of claim 1

CHARACTERIZED IN THAT

said problem specification describes extraction and manipulation of data on tapes and said output program effects said extraction and manipulation.

# FIG. 2'

0 202 007

PROGRAM GENERATOR FOR
A DOMAIN — 30

31 — USER'S REQUEST

33 — DATA BASE DICTIONARY (OPTIONAL)

32 — FRONT END

FLAT FILE

34 — CONSTRUCTOR

36 — PROBLEM DOMAIN INFORMATION

38 — INTERFACE UNIT

42 — PROGRAM ABSTRACTION

ATTRIBUTED TREE STRUCTURE

40 — DOMAIN DEPENDENT OR VARIABLE PART OF THE CODE GENERATOR (melex.c)

CONSTANT OR BASIC PART OF CODE GENERATOR

41 — TARGET PROGRAM TO OPERATION SYSTEM

FIG. $x^2$
PRIOR ART

10

PROGRAM GENERATOR

11  12

USER'S
REQUEST

DATA BASE

DICTIONARY )

13

FRONT-END
SEMANTIC
ANALYZER

14

INTERNAL STRUCTURE

(MAY BE LIKE
A TREE)

CODE
GEN

[OPTIONAL]

DATA BASE       22

APPLICATION
PROGRAM

16

OPERATING
SYSTEM &
HARDWARE

18

RESULTS

20

USER
INTERACTION       24

0 202 007

FIG. 3

ATTRIBUTED TREE — 56

PROGEN. C — 44

40

42

PROGRAM ABSTRACTION

SCANNER. C — 46

48

TREEWALK.C

RANGEWALK.C — 52

MCPRSE.C — 54

PROGRAM TARGET — 16

EVALUATOR.C — 50

MCLEX.C — 39

PROBLEM DOMAIN INFORMATION — 36

0 202 007

FIG. 4

FIG.5

A

90 — SCH: TREEWALK TYPE
COND: TREEWALK CONDITION
IFp2: TEMPORARY FILE
COPY(IFp2,IFp,UPTO"~}")

92 — SWITCH ON 'SCH'

93 — =

94 — CNODE SATISFIES THIS COND ?

NO → 1

YES

96 — SCANNER (IFp2,OFp,CNODE)

→ 1

101 — <

102 — MORE OF CCNODE< NEXT PREORDER DESC. OF CNODE>?

NO → 1

YES

104 — CCNODE SATISFIES THIS COND ?

NO

YES

106 — SCANNER (IFp2,OFp,CCNODE)

111 — >

1

112 — MORE OF CCNODE< NEXT ANCESTOR OF CNODE ?

NO → 1

YES

114 — CCNODE SATISFIES THIS COND ?

NO

YES

116 — SCANNER (IFp2,OFp,CCNODE)

# FIG. 6

B

120

COMPUTE THE RANGE
IFp2: TEMPORARY FILE
COPY (IFp2, IFp, UP TO "~ ]")

122

MORE OF
// NEXT I
IN THE RANGE
?

NO → 1

YES

ASSIGN I TO
GLOBAL RANGE
VAR. STORAGE

124

SCANNER
(IFp2,OFp,CNODE)

126